# EUROPÄISCHE PATENTANMELDUNG

(11) **EP 4 782 085 A1**
(43) Veröffentlichungstag der Anmeldung: **29.07.2026**
(21) Anmeldenummer: 25224857.0
(22) Anmeldetag: 18.12.2025
(51) Int. Cl.: B01D 53/00, B01D 5/00, B01D 8/00, F28B 1/04, B29C 55/02

(54) **KONDENSATFALLENVORRICHTUNG**

(30) Priorität: 19.12.2024 DE 102024139023
(71) Anmelder: Brückner Maschinenbau GmbH, 83313 Siegsdorf (DE)
(72) Erfinder: HÄUSL, Tobias, 83278 Traunstein (DE); Stengel, Elena, 83313 Siegsdorf (DE)
(74) Vertreter: Flach Bauer & Partner Patentanwälte mbB

(57) **Zusammenfassung**

Die vorliegende Erfindung betrifft eine Kondensatfallenvorrichtung 110 und ein Luftreinigungssystem 2, insbesondere für eine Folienreckanlage 1. Die Kondensatfallenvorrichtung 110 umfasst zumindest ein beweglich gelagertes Kondensationselement 112 und zumindest eine Antriebseinheit 114. Die Antriebseinheit 114 ist mit dem Kondensationselement 112 derart gekoppelt, um das Kondensationselement anzutreiben. Das Kondensationselement 112 ist so in der Kondensatfallenvorrichtung 110 angeordnet, um von einem kontaminierten Luftstrom (214) durch- und/oder überströmt zu werden. Das beweglich gelagerte Kondensationselement 112 ist so eingerichtet, dass Kontaminat, welches von dem Luftstrom 214 mitgeführt wird, an dem zumindest einem Kondensationselement 112 kondensiert. Durch eine Bewegung des Kondensationselements 112 kann das kondensierte Kontaminat zumindest teilweise von dem Kondensationselement entfernt werden.

## Beschreibung

### Gebiet der Erfindung

Die Erfindung betrifft eine Kondensatfallenvorrichtung sowie ein Luftreinigungssystem umfassend eine Kondensatfallenvorrichtung.

### Hintergrund

Luftreinigungssysteme mit Filtern und/oder Kondensatfallen sind in unterschiedlichen Industriezweigen bekannt.

Filter und Kondensatfallen dienen dazu unerwünschtes Kontaminat aus Gas- oder Dampfströmen zumindest teilweise zu entfernen, um die Effizienz und/oder Lebensdauer von Anlagen zu steigern. Insbesondere sollen Schäden, die durch das mitgeführte Kontaminat (z.B. Korrosionsschäden), oder durch die unerwünschte Ablagerung von Kontaminat entstehen können, vermieden werden. Grundsätzlich sollen Produktions- und oder Prozessräume durch den Einsatz von Filtern und Kondensatfallen vor Verschmutzung geschützt werden. Zudem soll die Produktqualität durch die zumindest teilweise Entfernung von Kontaminat aus dem Gas- bzw. Dampfstrom gesteigert werden.

Bekannte Filter und Kondensatfallen sind oftmals in der Lebensdauer beschränkt, da sie sich schnell zusetzen. Zudem kann durch das Zusetzen keine gleichbleibende Entfernung von Kontaminat aus Gas- oder Dampfströmen erreicht werden, sodass beispielsweise die Produktqualität mit zunehmender Laufzeit abnimmt. Weiterhin wird die Durchlässigkeit bekannter Filter und Kondensatfallen mit der Zeit herabgesetzt, sodass beispielsweise in Luftreinigungssystemen kein gleichmäßiger Luftstrom bereitgestellt werden kann, oder es einer aufwändigen Luftstromregelung bedarf, die die reduzierte Durchlässigkeit ausgleicht.

Zudem müssen bekannte Filter und Kondensatfallen in engen Zeitabständen gewartet werden. Dies bedeutet, dass Filter- und/oder Kondensationselemente ausgetauscht, oder gereinigt werden müssen. Dies erfordert oftmals ein Abschalten einer entsprechenden Industrieanlage, wodurch teils hohe Stillstandskosten entstehen können. Ebenso entstehen Kosten für die Reinging und den etwaigen Austausch der Filter.

Die industrielle Anwendung von Kondensatfallen erstreckt sich über verschiedene Branchen und umfasst eine Vielzahl von Einsatzgebieten. In der petrochemischen Industrie beispielsweise werden Kondensatfallen genutzt, um Kondensat aus Dampfströmen zu entfernen, bevor diese in weitere Prozesse eingeleitet werden. Dies trägt nicht nur zur Verbesserung der Anlageneffizienz bei, sondern steigert auch die Qualität der Endprodukte und minimiert Korrosionsschäden an Anlagenkomponenten. Ähnlich bedeutsam ist der Einsatz von Kondensatfallen in der Lebensmittelverarbeitung, wo sie dazu beitragen, die Reinheit von Dampf zu gewährleisten, der direkt mit Lebensmitteln in Kontakt kommt. Durch die Entfernung von Kondensat können Verunreinigungen vermieden werden, die die Qualität und Sicherheit der Lebensmittel beeinträchtigen könnten.

Darüber hinaus werden Kondensatfallen in der Vakuumtechnik eingesetzt, um Vakuumpumpen vor Kondensat zu schützen. Auch bei der Verarbeitung von Polymeren, insbesondere der Polymerfolienherstellung können Kondensatfallen zum Einsatz kommen. Während der Verarbeitung von Kunststoffen, wie beispielsweise dem Herstellen von Polymerfolien, kann Kontaminat aus dem Kunststoff (beispielsweise Monomere, Oligomere, Hilfs- und/oder Zusatzstoffe, und/oder andere Stoffe) austreten. Die Anwesenheit dieses Kontaminats kann die Qualität und die mechanischen Eigenschaften der hergestellten Kunststoffprodukte (insbesondere Folien) beeinträchtigen und/oder die Produktionsanlage (beispielsweise eine Folienreckanlage) beschädigen.

Trotz ihrer Bedeutung für verschiedene Anwendungsgebiete weisen herkömmliche Kondensatfallen oft Limitierungen auf, die ihre Leistungsfähigkeit einschränken und/oder einen hohen Wartungsaufwand bedeuten.

### Beschreibung der Erfindung

Der Erfindung liegt daher die Aufgabe zugrunde eine Kondensatfallenvorrichtung sowie ein Luftreinigungssystem zu schaffen, welche die vorgenannten Nachteile zumindest teilweise ausräumen.

Diese Aufgabe wird erfindungsgemäß durch eine Kondensatfallenvorrichtung, ein Luftreinigungssystem und eine Anlage zur Herstellung einer Materialbahn gemäß den unabhängigen Ansprüchen gelöst. Weitere Aspekte der Erfindung sind in den abhängigen Ansprüchen, sowie in der nachfolgenden Beschreibung genannt.

Insbesondere wird die Aufgabe durch eine Kondensatfallenvorrichtung gelöst, welche insbesondere für die Luftreinigung in einer Folienreckanlage, oder zur Reinigung von Abluft genutzt werden kann. Zudem kann die Kondensatfallenvorrichtung in anderen Industriezweigen, wie der Lebensmittelverarbeitung, der petrochemischen Industrie, der Energieerzeugung und/oder dergleichen genutzt werden.

Die Kondensatfallenvorrichtung umfasst zumindest ein beweglich gelagertes Kondensationselement und zumindest eine Antriebseinheit. Die Antriebseinheit ist dem zumindest einen Kondensationselement zugeordnet und kann das Kondensationselement antreiben.

Das eine beweglich gelagerte Kondensationselement ist so in der Kondensatfallenvorrichtung angeordnet, dass es von einem kontaminierten Luftstrom durch- und/oder überströmt wird.

Das beweglich gelagerte Kondensationselement ist so eingerichtet, dass Kontaminat, welches von dem zweiten Luftstrom mitgeführt wird, zumindest teilweise an dem zumindest einen Kondensationselement kondensiert. Das Kontaminat kann mithin aus dem Luftstrom (zumindest teilweise) entfernt werden.

Eine Bewegung des Kondensationselements, welche mittels der Antriebseinheit initiiert wird, führt dazu, dass gebildetes Kondensat, d.h. kondensiertes Kontaminat, zumindest teilweise von dem Kondensationselement entfernt wird.

Bei der Herstellung von Kunststofffolien umfasst das Kontaminat beispielsweise Monomere, Oligomere und/oder andere flüchtige Bestandteile, die aus der (noch warmen) Kunststofffolie oder der Schmelze entweichen. Dieses Kontaminat kann sich als sogenanntes *"White Powder"* in der Reckanlage, insbesondere in einer Querreckanlage, und/oder dem Belüftungssystem absetzen und dieses schädigen. Beispielsweise können Öffnungen verstopft, oder bewegliche Bauteile (wie Luft-Regelungsklappen) schwergängig oder sogar blockiert werden. Zudem kann die Produktqualität beeinträchtigt werden, wenn sich das Kontaminat auf dem Produkt (z.B. einer Kunststofffolie) absetzt.

Weiterhin ist die Entfernung des abgesetzten Kondensats aus der Anlage aufwändig, da hierfür i.d.R. die Reckanlage gestoppt und die Produktion unterbrochen werden muss. Die Kondensatfallenvorrichtung erlaubt es nun, das Kontaminat gezielt aus dem Luftstrom zu entfernen, bevor es sich absetzt. Somit kann die Produktqualität gesteigert und die Lebensdauer einer Anlage zur Herstellung von Kunststofffolien erhöht und/oder Reinigungsintervalle verlängert werden. Zudem wird durch die Kondensationsfallenanordnung die Standzeit etwaiger Filter deutlich erhöht.

In einem Aspekt kann die Kondensatfallenvorrichtung so eingerichtet sein, dass das beweglich gelagerte Kondensationselement im laufenden Betrieb der Anlage angetrieben und mithin bewegt werden kann. Somit kann das Kondensationselement im laufenden Betrieb zumindest teilweise von Kondensat befreit werden. Dies erlaubt es Stillstandzeiten zu vermeiden, jedenfalls aber deutlich zu reduzieren.

In einem Aspekt der Erfindung ist das beweglich gelagerte Kondensationselement derart mit der Antriebseinheit gekoppelt, dass das zumindest eine Kondensationselement im Wesentlichen translatorisch angetrieben wird. Insbesondere kann das zumindest eine Kondensationselement durch die Antriebseinheit in einer Richtung und entgegen dieser Richtung (beispielsweise auf und ab) bewegt werden. Diese Bewegung kann periodisch sein.

Diese Hin-und-Her-Bewegung kann zumindest einseitig von einem Anschlag begrenzt sein, sodass das zumindest eine Kondensationselement durch die Antriebseinheit gegen den Anschlag geführt wird. Die sich dabei ergebenden Stöße führen zu einer zumindest teilweisen Entfernung von sich abgesetzten Kondensat von dem Kondensationselement.

In einem Aspekt wird das Kondensationselement durch die Antriebseinheit von einer ersten Position angehoben und fällt anschließend in diese erste Position zurück. Die erste Position des Kondensationselements ist beispielsweise durch einen ersten Anschlag definiert, auf dem das Kondensationselement in der ersten Position aufsteht. Durch das Auftreffen auf den ersten Anschlag erfährt das Kondensationselement am Ende der Abwärtsbewegung einen Stoß.

Alternativ oder zusätzlich kann das Kondensationselement von der Antriebseinheit aktiv gegen einen Anschlag geführt werden. Ist beispielsweise die Aufwärtsbewegung des Kondensationselements durch einen (weiteren) zweiten Anschlag begrenzt, kann das Kondensationselement am Ende der Aufwärtsbewegung einen Stoß erfahren (durch das Anschlagen am Anschlag).

Es versteht sich, dass die Erfindung nicht auf Auf- und Abwärtsbewegungen beschränkt ist, sondern das Kondensationselement beliebig translatorisch bewegt werden kann, um zumindest teilweise von Kondensat befreit zu werden.

Insbesondere kann die Antriebseinheit dazu eingerichtet sein, eine Rotationsbewegung in eine Translationsbewegung des Kondensationselements zu übersetzen. Hierzu kann die Antriebseinheit zumindest ein Exzenterelement umfassen.

Das Exzenterelement kann beispielsweise eine Nocke einer Nockenwelle sein. Die zumindest eine Nocke der Nockenwelle kann mit dem Kondensationselement in Eingriff stehen, sodass eine Drehung der Nockenwelle in eine translatorische Bewegung (z.B. auf und ab) des Kondensationselements übersetzt wird.

In einem weiteren Aspekt umfasst die Kondensatfallenvorrichtung zumindest ein Führungselement. Zudem kann das beweglich gelagerte Kondensationselement ein umlaufendes Kondensationselement sein und von dem zumindest einen Führungselement umlaufend geführt werden. Das zumindest ein Führungselement kann beispielsweise eine Walze oder ein Rad, insbesondere ein Zahnrad, sein.

Ein umlaufendes Kondensationselement ermöglicht es, ein Kondensationselement bereitzustellen, das verglichen mit beispielsweise feststehenden Kondensationselementen eine größere Ausdehnung und insbesondre eine größere Oberfläche hat. Insbesondere kann das Kondensationselement einen Bereich, der von den Luftströmen durchströmt wird, passieren und sich zudem in einen Bereich erstrecken, der nicht durchströmt ist. Durch die umlaufende Führung ist beispielsweise immer nur ein Teil des Kondensationselements im durchströmten Bereich, sodass die Standzeit des Kondensationselements deutlich verlängert werden kann. Somit kommt es zu weniger Stillstandzeiten, die auf die Wartung der Kondensatfallenvorrichtung zurückzuführen sind.

In einem Aspekt ist das beweglich gelagerte Kondensationselement bandförmig oder plattenförmig. Insbesondere das umlaufende Kondensationselement kann bandförmig sein.

Sind mehrere Führungselemente (beispielsweise Walzen) vorgesehen, kann das Kondensationselement so umlenkt werden, dass es mehrfach von dem zweiten Luftstrom durchströmt wird. Somit kann die Effizienz der Kondensatfallenvorrichtung erhöht werden, da die Menge an abgeschiedenen Kontaminat erhöht werden kann. Beispielsweise kann das Kondensationselement so umgelenkt werden, dass der zweite Luftstrom zumindest zweimal, oder zumindest dreimal, oder zumindest viermal, oder zumindest sechsmal, oder zumindest achtmal das Kondensationselement durchströmt. Ebenso können mehrere Kondensationselemente in Reihe geschalten sein. Sind mehrere Kondensationselemente vorgesehen, die in Reihe geschalten sind, kann deren Öffnungsweite bzw. Maschenweite in Strömungsrichtung abnehmen.

Ein Kondensationselement, welches zuerst durchströmt wird, kann somit gröber sein, als ein nachfolgendes Kondensationselement. Beispielsweise kann die Größe von Öffnungen in dem zuerst durchströmten Kondensationselement im Bereich von 0,3 mm bis 10 mm, oder im Bereich von 0,5 mm bis 8 mm, oder im Bereich von 1 mm bis 8 mm, oder im Bereich von 3 mm bis 5 mm liegen (äquivalenter Durchmesser). Die Größe der Öffnungen des nachfolgenden Kondensationselements kann beispielsweise um zumindest 10%, oder zumindest 20% oder zumindest 30% reduziert sein. Der äquivalente Durchmesser gibt dabei an, wie groß der größte Kreis ist, der in die Öffnung eingeschrieben werden kann. Plattenförmige Kondensationselemente können insbesondere dann zum Einsatz kommen, wenn das beweglich gelagerte Kondensationselement im Wesentlichen translatorisch angetrieben wird. Beispiele für plattenförmige Kondensationselemente sind Kondensationselemente, die ein beispielsweise ein Reckblech, ein Lochblech, ein Metallgewebe/Drahtgewebe, eine Vliesmatte, ein Ringgewebe und/oder dergleichen umfassen.

Das zumindest eine plattenförmige Kondensationselement kann beispielsweise einen Rahmen umfassen, in den zumindest ein luftdurchlässiges Element (z.B. eine Vlies, oder ein Gewebe, oder auch eine Blechstruktur) eingespannt ist. Dadurch wird die Stabilität des Kondensationselements erhöht. Es ist möglich, dass ein Rahmen mehrere luftdurchlässige Elemente trägt. Die Antriebseinheit kann ein Antriebselement umfassen. Dieses Antriebselement kann dazu eingerichtet sein, das Kondensationselement mittelbar oder unmittelbar anzutreiben. Beispielsweise kann das Antriebselement ein Führungselement unmittelbar antreiben, sodass das Kondensationselement angetrieben wird. Das Antriebselement kann beispielsweise ein Elektromotor sein, oder einen Elektromotor umfassen. Ebenso ist es möglich, dass das Antriebselement händisch betätigbar ist und beispielsweise eine Handkurbel umfasst.

Die Antriebseinheit kann zudem geregelt sein. Wird von einem Sensor erfasst, dass sich Kondensat an dem Kondensationselement abgesetzt hat und/oder dass eine gewünschte Durchströmungsrate nicht mehr erzielt wird, kann die Antriebseinheit gestartet und das Kondensationselement bewegt werden, um das Kondensat zumindest teilweise zu entfernen. Ebenso kann die Antriebseinheit zeitlich gesteuert sein und das Kondensationselement zu definierten Zeitpunkten bewegen. Ist das Antriebselement händisch betätigbar kann eine entsprechende Anweisung an das Bedienpersonal ausgegeben werden, dass das zumindest eine Kondensationselement bedient werden muss.

Weiterhin kann das Kondensationselement entnehmbar sein, um es zu reinigen. Alternativ und/oder zusätzlich kann die Kondensatfallenvorrichtung zumindest ein Reinigungselement umfassen, welches dazu eingerichtet ist, Kondensat von dem beweglich gelagerten Kondensationselement zu entfernen. Das Reinigungselement kann ein mechanisches Reinigungselement, ein chemisches Reinigungselement und/oder ein physikalisches Reinigungselement sein.

Beispielsweise kann das Reinigungselement zumindest eine Bürste und/oder zumindest einen Schaber umfassen, wobei das Reinigungselement so angeordnet ist, dass das Kondensationselement daran vorbeigeführt wird. Beim Vorbeiführen kann das Reinigungselement dann Kondensat vom Kondensationselement entfernen, insbesondere abstreifen. Weiterhin kann das Reinigungselement ein Reinigungsmittel auftragen, welches das Kondensat entfernt, oder dessen Entfernung zumindest vereinfacht. Weiterhin kann das Reinigungselement eine Druckluftdüse und/oder eine (Wasser)-Strahldüse umfassen, welche das vorbeigeführte Kondensationselement sauber blasen und/oder spülen.

In einem weiteren Aspekt kann das Reinigungselement dazu eingerichtet sein, das Kondensationselement zumindest bereichsweise in Schwingung zu versetzten, sodass das gebildete Kondensat gewissermaßen abgeklopft wird. Dies kann durch feststehende oder bewegliche Strukturen erfolgen, an denen das Kondensationselement vorbeigeführt wird. Auch ist es möglich, dass das Kondensationselement nach erfolgter Reinigung getrocknet, insbesondere trocken geblasen wird. Das Reinigungselement erlaubt es, dass das Kondensationselement während des laufenden Betriebes von Kondensat befreit werden kann.

Die Kondensatfallenvorrichtung kann zudem eine Auffangvorrichtung umfassen, welche zum Auffangen von Kondensat eingerichtet ist. Das aufgefangene Kondensat kann kontinuierlich oder in Intervallen aus der Auffangvorrichtung entnommen werden. Dies kann automatisiert oder manuell erfolgen. Die Auffangvorrichtung kann beispielsweise eine Wanne, ein Container, und/oder dergleichen sein.

In einem Aspekt umfasst die Kondensatfallenvorrichtung zumindest eine Luftmischeinrichtung. Die Luftmischeinrichtung ist dazu eingerichtet, einen ersten Luftstrom und einen zweiten, kontaminierten Luftstrom zu vermischen, um einen gemischten Luftstrom zu generieren. Der gemischte Luftstrom kann sodann in Richtung des zumindest einen Kondensationselements geleitet werden, um dieses zu überströmen oder zu durchströmen.

Es hat sich gezeigt, dass hierdurch sehr homogen gemischte Luftströme erreichbar sind. Dies führt zu einer Steigerung der Produktqualität, insbesondere wenn der gemischte Luftstrom einer Anlage zur Herstellung von Kunststofffolien, beispielsweise einer Kühlzone einer Reckanlage, als Zuluft zugeführt wird.

Der erste Luftstrom weist dabei eine erste Temperatur auf und der zweite Luftstrom eine zweite Temperatur, wobei die zweite Temperatur vorzugsweise höher ist als die erste Temperatur. Der gemischte Luftstrom weist sodann eine Temperatur auf, die zwischen der ersten und der zweiten Temperatur liegt und führt Kontaminat mit. Dieses Kontaminat kann dann - u.a. auf Grund der reduzierten Temperatur - an dem Kondensationselement kondensieren und somit abgeschieden werden. In einem Aspekt umfasst die Luftmischeinrichtung zumindest ein Luftmischelement. Das zumindest eine Luftmischelement wird von dem ersten Luftstrom und dem zweiten Luftstrom (die bereits teilweise vermischt sein können) durchströmt. Hierdurch wird eine homogene Vermischung der Luftströme erreicht und eine sogenannte Strähnenbildung vermieden.

Die unerwünschte Strähnenbildung tritt auf, wenn unterschiedlich temperierte Luftströme aufeinandertreffen und sich vermischen. Der Begriff "Strähnenbildung" beschreibt dabei die charakteristische Struktur, die durch eine unvollständige Durchmischung entsteht, d.h. es bilden sich Luftsträhnen mit unterschiedlicher Temperatur. Dies ist für die Qualität der Folie nachteilig. Durch das Luftmischelement kann die Strähnenbildung reduziert oder gar verhindert und die Qualität der Folie erhöht werden. Auch durch das zumindest eine Kondensationselement kann die Strähnenbildung weiter vermindert werden.

Das zumindest eine Luftmischelement kann insbesondere ein Reckblech, ein Lochblech, ein Metallgewebe, ein Drahtgewebe, eine Vliesmatte, ein Ringgewebe und/oder dergleichen umfassen. Sind mehrere Luftmischelemente vorgesehen, können diese in Reihe geschalten sein, wobei deren Öffnungsweite bzw. Maschenweite in Strömungsrichtung abnehmen kann.

Ein Luftmischelement, welches zuerst durchströmt wird, kann somit gröber sein, als ein nachfolgendes Luftmischelement. Beispielsweise kann die Größe von Öffnungen in dem zuerst durchströmten Luftmischelement im Bereich von 0,3 mm bis 10 mm, oder im Bereich von 0,5mm bis 8 mm, oder im Bereich von 1 mm bis 8 mm, oder im Bereich von 3 mm bis 5 mm liegen (äquivalenter Durchmesser). Die Größe der Öffnungen des nachfolgenden Luftmischelements kann beispielsweise um zumindest 10%, oder zumindest 20% oder zumindest 30% reduziert sein.

In einem weiteren Aspekt kann die Luftmischeinrichtung so eingerichtet sein, dass der erste Luftstrom und der zweite Luftstrom in einem Gleichstrom, einem Gegenstrom oder einem Querstrom in die Luftmischeinrichtung strömen. Im Gleichstrom-Betrieb sind der erste und zweite Luftstrom im Wesentlichen in die gleiche Richtung orientiert. Im Gegenstrom-Betrieb sind der erste und zweite Luftstrom in entgegengesetzten Richtungen orientiert. Im Querstrom -Betrieb stehen der erste und der zweite Luftstrom winklig, beispielsweise im Wesentlichen orthogonal, aufeinander.

In einem weiteren Aspekt kann die Luftmischeinrichtung zumindest eine Düsenanordnung (beispielsweise einen Düsenkasten) umfassen. Die Düsenanordnung ist zum Leiten des ersten und/oder zweiten Luftstroms eingerichtet. Es können beispielsweise zwei Typen von Düsenanordnungen vorgesehen sein, wobei ein erster Typ zum Leiten des ersten Luftstroms und ein zweiter Typ zum Leiten des zweiten Luftstroms eingerichtet sein kann. Von jedem Typ kann zumindest eine Düsenanordnung Teil der Kondensatfallenvorrichtung sein. Durch eine entsprechende Anordnung der Düsenanordnungen kann dann ein Gleichstrom, Gegenstrom oder Querstrom erzeugt werden.

Die Düsenanordnung umfasst eine Vielzahl von Ausströmöffnungen, die so angeordnet sind, dass der erste Luftstrom (bzw. der zweite Luftstrom) im Wesentlichen über die gesamte Breite des Luftmischelements und/oder die gesamte Breite des Kondensationselements das Luftmischelement bzw. Kondensationselement anströmt. Somit kann die gesamte Breite eines Luftmischelements zur weiteren Vermischung des Luftstroms bzw. die gesamte Breite des Kondensationselements zur Kondensatbildung genutzt werden. Hierdurch wird die Effizient der Kondensatfallenvorrichtung erhöht.

Weiterhin kann die Kondensatfallenvorrichtung ein Temperierelement (beispielsweise ein Heiz- oder Kühlelement) umfassen, welches Temperierelement dazu eingerichtet ist, den ersten Luftstrom, den gemischten Luftstrom und/oder einen Ausgabeluftstrom der Kondensatfallenvorrichtung zu temperieren. Über die Temperierung des ersten Luftstroms bzw. des gemischten Luftstroms kann das zumindest eine Kondensationselement auf eine Temperatur temperiert werden, die unterhalb einer Kondensationstemperatur des Kontaminats liegt. Hierdurch wird die Kondensation begünstigt.

Durch eine Temperierung des Ausgabeluftstroms kann dieser auf eine Prozesstemperatur gebracht werden (beispielsweise, wenn der Ausgabeluftstrom zurück in eine Produktionsanlage geführt wird), oder dem Ausgabeluftstrom kann Energie entzogen werden, bevor dieser an die Umgebung abgegeben wird.

In -einem Aspekt ist das Kondensationselement ein umlaufendes Metallband. Beispielsweise kann das Metallband ein Metallgestrick umfassen. Ebenso ist es möglich, dass das Metallband als Gliedergurtband, Scharnierband, Kettenband, Stabgeflechtband, Drahtösengliederband, Sprialgeflechtband und/oder dergleichen ausgebildet ist. Ist das Kondensationselement plattenförmig, kann das Metallband in einem Rahmen des Kondensationselements gehalten sein. Das Metallband kann permeabel sein, sodass der Luftstrom durch das Metallband strömen können. Je nach Anwendung kann eine Maschenweite bzw. Gliedergröße gewählt werden, die eine gute Kondensatbildung fördert und zugleich eine gute Durchströmbarkeit bietet.

Die einzelnen Glieder bzw. Maschen des Metallbandes können, wenn das Metallband umgelenkt wird (oder das Kondensationselement anschlägt), sich relativ so zueinander bewegen, sodass abgeschiedenes Kondensat vom Metallband abfällt. Das Metallband kann also eine gewisse selbstreinigende Wirkung aufweisen.

Das Metallband kann aus Stahl, insbesondere einem korrosionsbeständigen Stahl gefertigt sein, wie beispielsweise 1.4301 bzw. 1.4571. Ebenso ist es möglich, Nichteisenmetalle zu verwenden.

Insbesondere kann das Kondensationselement einen Kondensationsabschnitt und zumindest einen Förderabschnitt umfassen. Beispielsweise können auch zwei Förderabschnitte vorgesehen sein, zwischen denen der Kondensationsabschnitt angeordnet ist.

Der Kondensationsabschnitt ist mit dem Förderabschnitt verbunden. Zudem ist der Kondensationsabschnitt dazu eingerichtet, Kondensat zu bilden. Der Förderabschnitt kann mit der Antriebseinheit zusammenwirken, um das Kondensationselement anzutreiben. In einem Aspekt umfasst der Förderabschnitt eine Kette, die beispielsweise seitlich an den Kondensationsabschnitt angebracht (z.B. geschweißt, genietet, oder dergleichen) ist. Ebenso kann der Förderabschnitt einen Riemen umfassen.

Die Aufgabe wird weiterhin durch ein Luftreinigungssystem gelöst, welches zumindest eine Kondensatfallenvorrichtung der oben beschriebenen Art umfasst. Das Luftreinigungssystem kann beispielsweise Teil einer Folienreckanlage sein und dort beispielsweise Zuluft liefern und/oder bei der Entgasung eingesetzt werden.

Neben zumindest einer Kondensatfallenvorrichtung umfasst das Luftreinigungssystem zumindest eine Luftstromzuführeinheit, welche dazu eingerichtet ist, einen ersten Luftstrom an die Kondensatfallenvorrichtung bereitzustellen. Insbesondere wird dieser erste Luftstrom einer Luftmischeinrichtung bereitgestellt. Die Luftstromzuführeinheit kann beispielsweise einen Ventilator, insbesondere einen regelbaren Ventilator umfassen.

Zudem umfasst das Luftreinigungssystem zumindest eine Ablufteinheit, welche dazu eingerichtet ist, Abluft aus einer Anlage (beispielsweise einer Folienreckanlage) zu entnehmen und der Kondensatfallenvorrichtung als zweiten Luftstrom bereitzustellen. Insbesondere wird dieser zweite Luftstrom der Luftmischeinrichtung bereitgestellt. Da dieser zweite Luftstrom der Anlage entnommen ist, ist dieser typischerweise kontaminiert. Die Ablufteinheit kann beispielsweise einen Ventilator, insbesondere einen regelbaren Ventilator umfassen. Zudem kann ein steuer-bzw. regelbares Ventil vorgesehen sein, welches es ermöglicht nur einen Teil der entnommenen Abluft der Kondensatfallenvorrichtung als zweiten Luftstrom bereitzustellen.

Wie oben beschrieben wurde, ist die Luftmischeinrichtung dazu eingerichtet, den ersten Luftstrom und den zweiten, kontaminierten Luftstrom zu vermischen, um einen gemischten Luftstrom zu generieren. Der gemischte Luftstrom kann dann über bzw. durch ein Kondensationselement der Kondensatfallenvorrichtung geleitet werden, um aus dem gemischten Luftstrom Kontaminat abzuscheiden.

Das Luftreinigungssystem ist weiterhin dazu eingerichtet, den gemischten Luftstrom nach der Kondensatfallenvorrichtung an die Anlage als Zuluft bereitzustellen. Mithin kann aus der Anlage Kontaminat entfernt werden und die Produktqualität gesteigert werden.

Das Luftreinigungssystem kann weiterhin zumindest eine Luftverteilervorrichtung umfassen. Die Luftverteilervorrichtung ist dazu eingerichtet, den zweiten Luftstrom von der Ablufteinheit zu empfangen, den empfangenen Luftstrom aufzufächern und den aufgefächerten Luftstrom an die Kondensatfallenvorrichtung, insbesondere die Luftmischeinrichtung, bereitzustellen. Somit ist es möglich, die Fläche des zumindest einen Luftmischelements bzw. des Kondensationselements ideal zu nutzen.

Das Luftreinigungssystem kann weiterhin eine Grobfilteranordnung umfassen. Die Grobfilteranordnung kann Kontaminat, welches die Kondensatfallenvorrichtung passieren konnte aus dem Luftstrom filtern. Die Grobfilteranordnung kann also der Kondensatfallenvorrichtung nachgeschaltet sein.

Die Grobfilteranordnung kann einen oder mehrere Grobfilter umfassen, welche beispielsweise ein Metallgestrick, ein Reckbleck, ein Filtervlies und/oder dergleichen umfassen. Der Grobfilter kann wiederverwendbar (und entsprechend reinigbar sein), oder zur einmaligen Verwendung ausgeführt sein.

Zwischen der Kondensatfallenvorrichtung und der Grobfilteranordnung kann zudem ein Heizelement angeordnet sein. Ebenfalls ist es möglich, ein Heizelement nach der Grobfilteranordnung anzuordnen.

Weiterhin kann das Luftreinigungssystem zumindest eine Filteranordnung umfassen, welche zumindest einen Filter umfasst, der typischerweise feiner ist als der Grobfilter. Somit kann weiteres Kontaminat aus dem Luftstrom entfernt werden. Die Filteranordnung ist beispielsweise der Grobfilteranordnung nachgeschaltet.

In einem Aspekt umfasst das Luftreinigungssystem ein Heizelement. Die zumindest eine Filteranordnung kann in Strömungsrichtung vor und/oder nach dem Heizelement angeordnet sein. Insbesondere kann ein Heizelement zwischen der Grobfilteranordnung und der Filteranordnung und/oder nach der Filteranordnung angeordnet sein.

Das Luftreinigungssystem kann weiterhin dazu eingerichtet sein, einen Luftstrom oder einen Teil des Luftstroms, der die Kondensatfallenvorrichtung (oder die Grobfilteranordnung, oder die Filteranordnung) verlässt an die Umwelt abzugeben und/oder erneut der Anlage zuzuführen. Die Abluft kann also weitestgehend von Kontaminat befreit werden, sodass diese wiederverwendet werden kann.

Weiterhin wir die Aufgabe durch eine Anlage zur Herstellung einer Materialbahn, insbesondere eine Folienreckanlage, mit zumindest einem vorstehend beschriebenen Luftreinigungssystem gelöst.

### Kurze Beschreibung der Figuren

Die Erfindung wird nachfolgend anhand der beigefügten Figuren beispielhaft näher erläutert. Dabei zeigt
- Figur 1A: eine schematische Darstellung einer erfindungsgemäßen Kondensatfallenvorrichtung;
- Figur 1B: eine weitere schematische Darstellung der erfindungsgemäßen Kondensatfallenvorrichtung aus Figur 1;
- Figur 1C: eine schematische Detaildarstellung eines Kondensationselements;
- Figur 2A: eine schematische Detaildarstellung einer Luftmischeinrichtung;
- Figur 2B: eine schematische Detaildarstellung eines Kondensationselements;
- Figur 2C: eine schematische Detaildarstellung einer Antriebseinheit;
- Figur 3A: eine schematische Darstellung eines Luftreinigungssystems;
- Figur 3B: eine schematische Darstellung eines weiteren Luftreinigungssystems;
- Figur 4: eine schematische Darstellung einer Grobfilteranordnung, und
- Figur 5: eine schematische Darstellung einer Anlage zur Herstellung einer Materialbahn.

### Beschreibung der Figuren

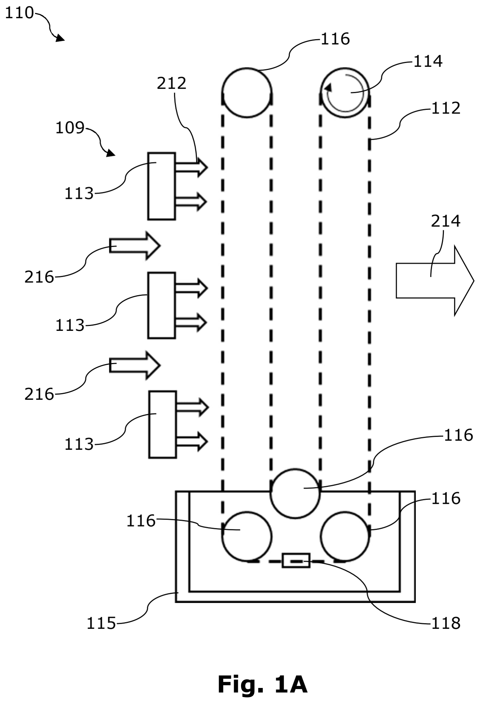

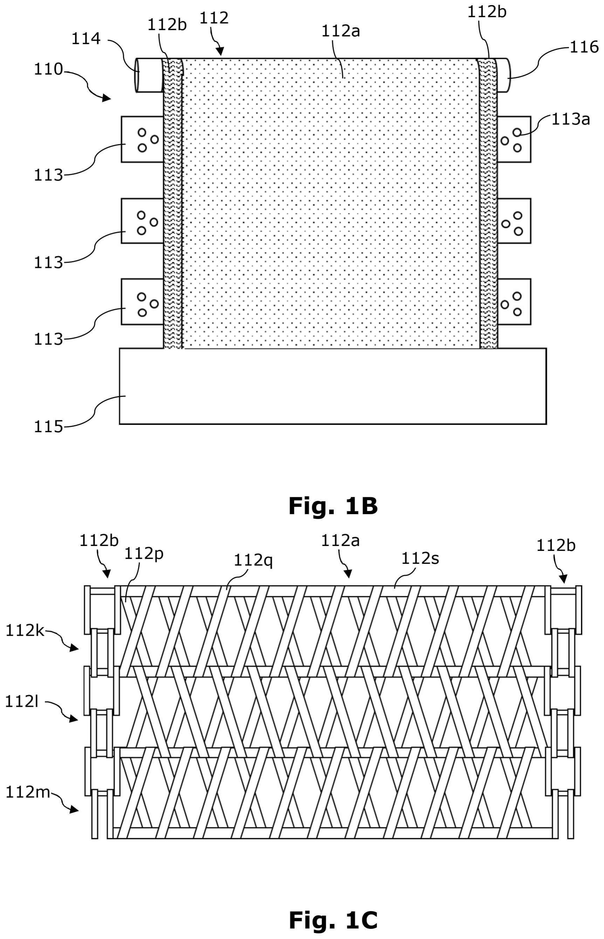

Figur 1A zeigt eine schematische Darstellung einer erfindungsgemäßen Kondensatfallenvorrichtung 110. In Figur 1B ist die erfindungsgemäße Kondensatfallenvorrichtung 110 in einer weiteren Ansicht gezeigt.

Die Kondensatfallenvorrichtung 110 umfasst ein beweglich gelagertes, hier umlaufendes Kondensationselement 112. Das Kondensationselement 112 ist in der gezeigten Ausführungsform bandförmig, beispielsweise als Gliedergurtband (beispielsweise ein Runddraht-Gliedergurt), ausgebildet.

Weiterhin umfasst die Kondensatfallenvorrichtung 110 zumindest ein Führungselement 116. Hier sind mehrere Führungselemente 116 vorgesehen, welche als Führungswalzen ausgebildet sind. Das Kondensationselement 112 wird über die Führungswalzen 116 geführt und mehrfach umgelenkt, sodass ein Luftstrom 212, 216 mehrfach (hier viermal) durch das Kondensationselement 112 strömt.

Um das Kondensationselement 112 umlaufend anzutreiben, ist ein Antriebseinheit 114 bereitgestellt. Die Antriebseinheit umfasst ein Antriebselement, wie beispielsweise einen Elektromotor oder eine Handkurbel. Wie in Figur 1B gezeigt ist, kann das Antriebselement der Antriebseinheit 114 eine Führungswalze 116 antreiben, welche dann das Kondensationselement 112 antreibt.

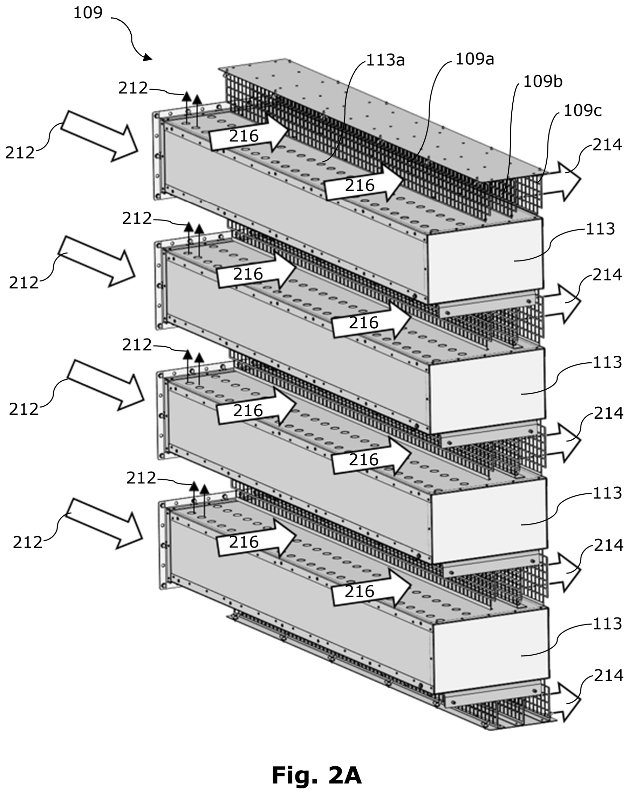

In Strömungsrichtung vor dem Kondensationselement 112 ist eine Luftmischeinrichtung 109 angeordnet. Diese umfasst eine Vielzahl von Düsenanordnungen 113. Hier sind exemplarisch drei Düsenanordnungen 113 gezeigt. Die Düsenanordnung 113 dient im gezeigten Ausführungsbeispiel zum Leiten eines ersten Luftstroms 212. Die Düsenanordnung umfasst eine Vielzahl von Ausströmöffnungen 113a (s. Figur 1B), die so angeordnet sind, dass der Luftstrom 212 im Wesentlichen über die gesamte Breite des Kondensationselements 112 das Kondensationselement 112 anströmt. Die Öffnungen könnten alternativ oder zusätzlich auch ober und/oder unterseitig an den Düsenanordnungen vorgesehen sein, wie dies beispielsweise in Fig. 2A gezeigt ist.

Zwischen den Düsenanordnungen 113 kann ein weiterer, zweiter Luftstrom 216 geleitet werden. Der erste Luftstrom 212 weist eine erste Temperatur T1 auf. Der zweite Luftstrom 216 kann kontaminiert sein (also Kontaminat mitführen) und eine zweite, höhere Temperatur T2 aufweisen. Durch die Führung der Luftströme 212, 216 werden diese gemischt. Der gemischte Luftstrom weist eine Temperatur auf, die zwischen den Temperaturen T1 und T2 liegt. Dies begünstigt die Kondensation des Kontaminats am Kondensationselement 112.

Vor dem Kondensationselement 112 kann ein Luftmischelement, beispielsweise in Form eines Lochblechs, angeordnet sein (hier nicht gezeigt). Das Luftmischelement vermischt die beiden Luftströme 212, 216 weiter.

Trifft dieser gemischte, kontaminierte Luftstrom auf das temperierte Kondensationselement 112 kann das mitgeführte Kontaminat am Kondensationselement 112 kondensieren und so aus dem Luftstrom entfernt werden. Das Kondensationselement ist insbesondere indirekt temperiert, das hier die Luftströme mit unterschiedlicher Temperatur aufeinander treffen. Ebenso ist es möglich eine aktive Temperierung vorzusehen.

Nach dem Passieren des Kondensationselement kann der Luftstrom als Zuluft einer Industrieanlage zugeführt, oder in die Umwelt abgeführt werden. Je nach Grad der Kontamination können vorab weitere Filterungen notwendig sein.

Das am Kondensationselement 112 anheftende Kondensat kann von einem Reinigungselement 118 entfernt werden. Das Reinigungselement kann ein mechanisches Reinigungselement, ein chemisches Reinigungselement und/oder ein physikalisches Reinigungselement sein, welches das Kondensationselement 112 reinigt, wenn es an ihm vorbeigeführt wird.

Zudem kann eine Auffangvorrichtung 115 bereitgestellt sein, um das Kondensat aufzufangen. Das aufgefangene Kondensat kann dann kontinuierlich oder in Intervallen aus der Auffangvorrichtung 115 entnommen werden.

Wie in Figur 1B gezeigt ist, umfasst das Kondensationselement 112 einen Kondensationsabschnitt 112a. In diesem schlägt sich hauptsächlich das Kondensat nieder. Kondensationsabschnitt 112a kann beispielsweise ein Drahtgestrick und/oder ähnliches umfassen. Seitlich des Kondensationsabschnitts 112a ist zu beiden Seiten je ein Förderabschnitt 112b angeordnet. Die Förderabschnitte 112b sind mit dem Kondensationsabschnitt 112a verbunden und können mit einer Antriebseinheit 114 zusammenwirken.

Wie in Figur 1C schematisch dargestellt ist, können die Förderabschnitte 112b beispielsweise als Ketten ausgebildet sein, die mit einem Zahnrad eingreifen können, um das Kondensationselement 112 anzutreiben. Der Kondensationsabschnitt 112a ist in Figur 1C als Gurtband ausgebildet, welches mehrere Gurtlieder 112k, 112l, 112m umfasst. Die Gurtlieder können aus Draht 112q geformt sein, und über Gurtachsen 112s verbunden sein.

Wird das Kondensationselement 112 umgelenkt, verschieben sich die einzelnen Gurtlieder 112k, 112l, 112m zueinander, sodass abgeschiedenes Kondensat vom Kondensationselement 112 abfallen kann. Das Kondensationselement 112 weist also eine gewisse selbstreinigende Wirkung auf.

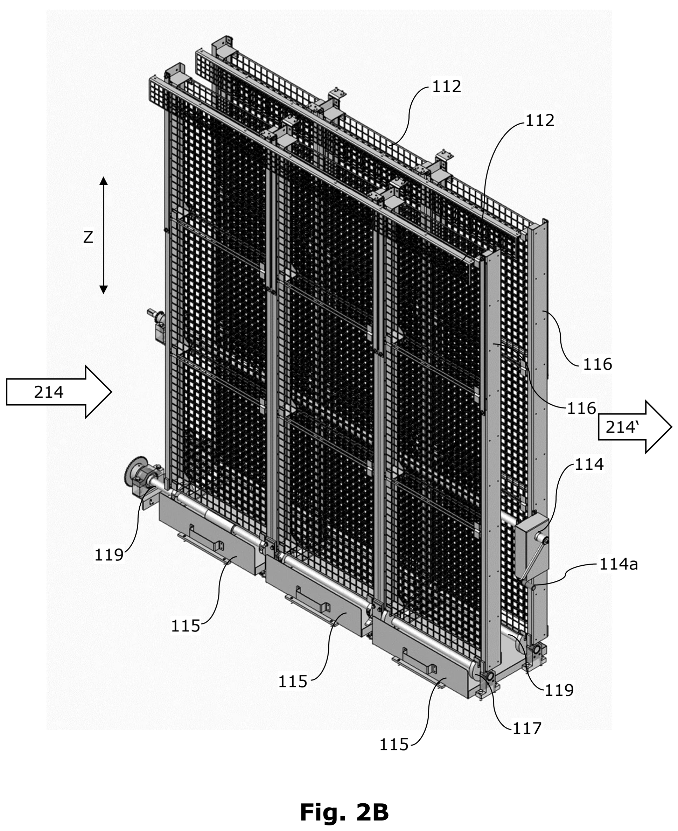

Figur 2A ist eine schematische Darstellung einer Luftmischeinrichtung 109, die als Teil einer Kondensatfallenvorrichtung 110 einem Kondensationselement (s. Fig. 2B) vorgeschalten sein kann. Die in Figur 2A gezeigte Luftmischeinrichtung 109 umfasst mehrere plattenförmige Luftmischelemente 109a, 109b, 109c. Die plattenförmigen Luftmischelemente 109a, 109b, 109c umfassen hier je ein Lochblech, welches im gezeigten Beispiel rechteckige Durchgangsöffnungen aufweist. Es versteht sich, dass die Durchgangsöffnungen auch anders geformt sein können. Beispielsweise können die Durchgangsöffnungen auch rund oder oval sein, oder jede andere Form aufweisen. Kombinationen unterschiedlicher Formen sind auch möglich.

Wie gezeigt, kann die Luftmischeinrichtung mehrere Luftmischelemente umfassen. In der gezeigten Darstellung sind drei Luftmischelemente 109a, 109b, 109c in Strömungsrichtung nacheinander (in Serie) angeordnet. Die Lochgröße der Luftmischelemente 109a, 109b, 109c kann in Strömungsrichtung abnehmen.

In der in Figur 2A gezeigten Ausführungsform umfasst die Luftmischeinrichtung 109 vier Düsenanordnungen 113. Diese dienen zum Leiten eines Luftstroms 212. Die Düsenanordnung umfasst eine Vielzahl von Ausströmöffnungen 113a, die ober und/oder unterseitig an den Düsenanordnungen vorgesehen sind Alternativ und/oder zusätzlich können die Ausströmöffnungen auch wie in Fig. 1B gezeigt angeordnet sein. Über die Düsenanordnungen 113 wird der Luftstrom 212 im Wesentlichen über die gesamte Breite des Luftmischelements 109a geleitet. Der Luftstrom 212 kann beispielsweise Frischluft umfassen, oder aus Frischluft bestehen und eine erste Temperatur T1 aufweisen.

Zwischen den Düsenanordnungen 113 kann ein weiterer Luftstrom 216 auf die Luftmischelemente 109a-c geleitet werden (hier im Querstrom). Im Bereich der Düsenanordnungen kommt es zu einer ersten Vermischung der Luftströme 212, 216. Durch die Luftmischelemente 109a-c wird diese Vermischung gesteigert, sodass am Ende ein im Wesentlichen homogen gemischter Luftstrom 214 generiert wird.

Der Luftstrom 216 kann kontaminiert sein (also Kontaminat mitführen) und eine zweite, höhere Temperatur T2 aufweisen. Aufgrund der Durchmischung kommt es zu einer Abkühlung, sodass Kontaminat ausfallen bzw. kondensieren kann, wenn der kontaminierte, gemischte Luftstrom 214 auf das Kondensationselement 112 trifft.

Dies ist in Fig. 2B gezeigt. Der kontaminierte, gemischte Luftstrom 214 trifft auf das Kondensationselement 112. Dort kondensiert das Kontaminat. Der gemischte, gereinigte Luftstrom 214' (also nach dem Durchlaufen des Kondensationselement 112) kann dann als Zuluft einer Industrieanlage zugeführt, oder in die Umwelt abgeführt werden. Je nach Grad der Kontamination können vorab weitere Filterungen notwendig sein.

Das am Kondensationselement 112 anheftende Kondensat kann wie in Figur 2B gezeigt ist, von dem beweglich gelagerten Kondensationselement 112 entfernt werden.

Hierzu ist das beweglich gelagerte Kondensationselement 112 mit einer Antriebseinheit 114 gekoppelt. Die Antriebseinheit umfasst eine Handkurbel 114a. Mittels der Handkurbel 114a können die Wellen 119 rotatorisch angetrieben werden. Es versteht sich, dass anstelle der Handkurbel andere Antriebselemente, wie beispielsweise ein Elektromotor genutzt werden kann.

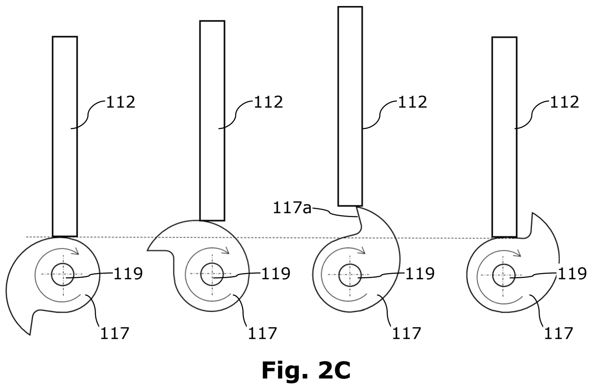

Auf der Welle 119 sind Exzenterelemente 117 angeordnet. Auf diesen Exzenterelementen 117 liegt zumindest ein Kondensationselement 112 auf. Eine Drehung der Welle 119 führt mithin zu einer translatorischen Auf- und Ab-Bewegung des Kondensationselements (Bewegungsrichtung Z). Die translatorische Bewegung wird durch die Führungselemente 116, hier seitliche Führungsschienen geführt. Der Bewegungsablauf ist nochmals in Fig. 2C dargestellt.

Unterhalb der Kondensationselemente 112 sind Auffangvorrichtungen 115 in Form von Schubkästen bereitgestellt. Diese fangen das entfernte Kondensat auf.

In Figur 2C ist die Antriebseinheit, insbesondere die Auf- und Ab-Bewegung eines Kondensationselements 112 nochmals im Detail in einer Seitenansicht dargestellt. Wie gezeigt ist, ist ein Exzenterelement 117 auf einer Welle 119 angeordnet. In der Ausgangslage (ganz links) ist das Exzenterelement 117 in einer ersten Stellung. Das Kondensationselement 112 liegt auf dem Exzenterelement 117 auf und ist in einer ersten Position.

Eine Drehung der Welle 119 führt zu einer Drehung des Exzenterelements 117 und mithin zum Anheben des Kondensationselements 112 (s. Fig. 2C, zweite Darstellung von links). Wird die Welle 119 weitergedreht, wird auch das Kondensationselements 112 weiter angehoben (s. Fig. 2C, dritte Darstellung von links).

In der gezeigten Darstellung, umfasst das Exzenterelement einen Absatz 117a. An diesem Absatz 117a ändert sich der Abstand der Außenkontur des Exzenterelements 117 zum Mittelpunkt der Welle 119 sprunghaft. Wird der Absatz 117a von dem Kondensationselement 112 überschritten, wie von der dritten zur vierten Darstellung in Figur 2C der Fall, fällt das Kondensationselement 112 ruckartig in die erste Position zurück. Hierbei kann es auf das Exzenterelement 117 oder einen Anschlag (nicht gezeigt) auftreffen.

Bei der Rückkehr in die erste Position erfährt das Kondensationselement 112 am Ende der Abwärtsbewegung einen Stoß. Dieser führt zu einer zumindest teilweisen Entfernung von sich abgesetzten Kondensat von dem Kondensationselement 112.

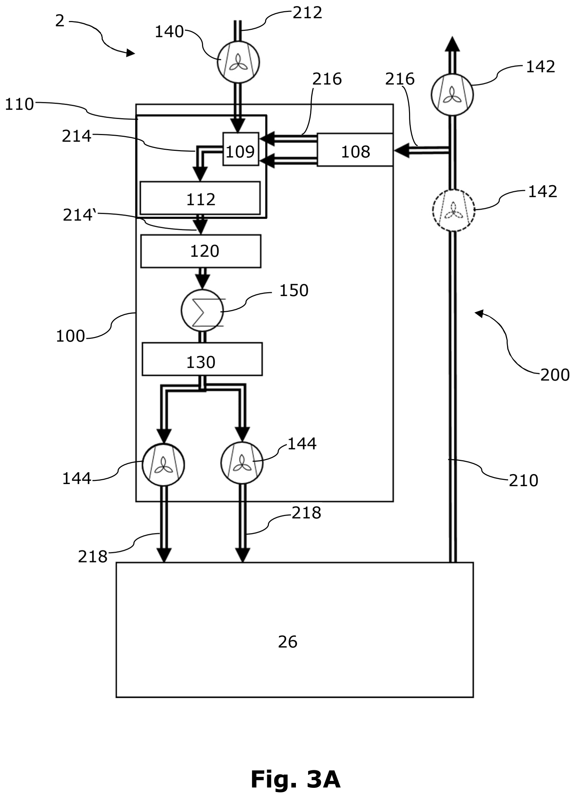

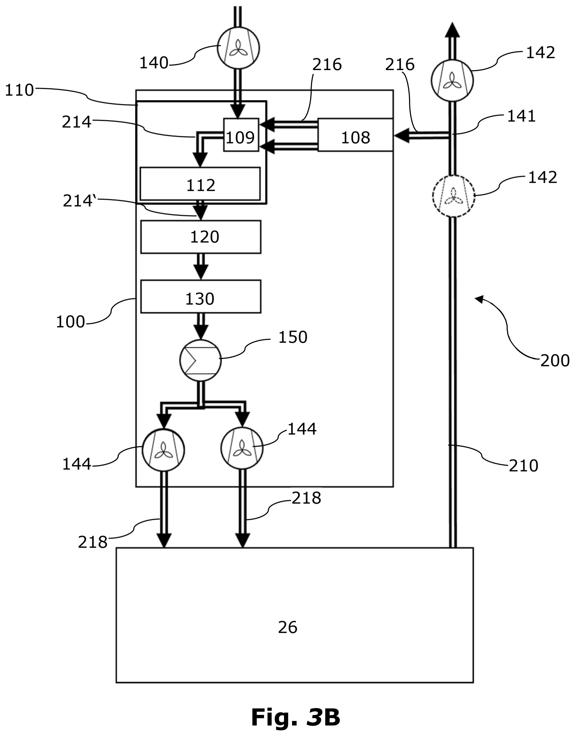

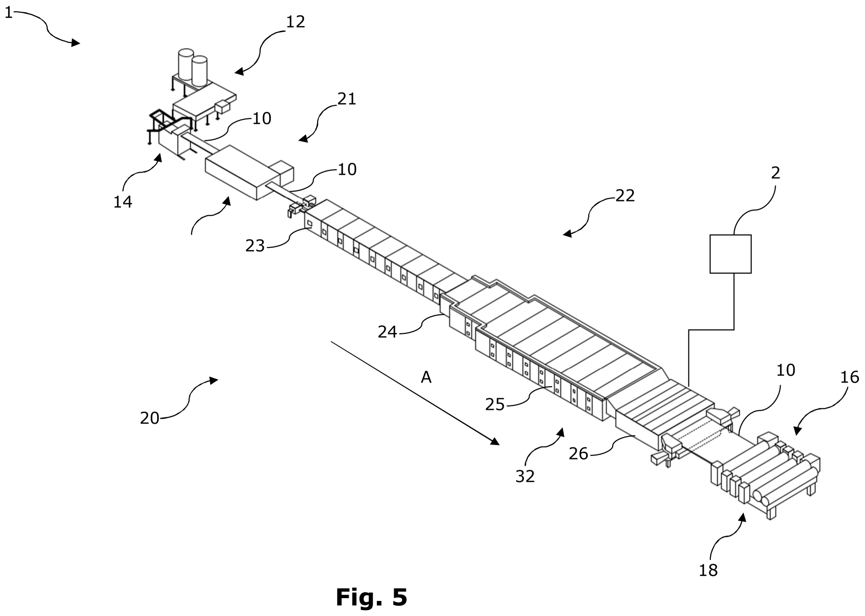

Figur 3A zeigt eine schematische Darstellung eines Luftreinigungssystems 2. Figur 3B zeigt ein weiteres Luftreinigungssystem 2. Das Luftreinigungssystem 2 kann beispielsweise Teil einer Folienreckanlage sein, wie sie in Figur 5 gezeigt ist, und dort beispielsweise Zuluft liefern und/oder bei der Entgasung eingesetzt werden.

Das Luftreinigungssystems 2 umfasst zumindest eine Kondensatfallenvorrichtung 110, zumindest eine Luftstromzuführeinheit 140 und zumindest eine Ablufteinheit 200.

Die Luftstromzuführeinheit 140 ist dazu eingerichtet, einen ersten Luftstrom 212 an die Kondensatfallenvorrichtung 110 bereitzustellen. Die Luftstromzuführeinheit kann beispielsweise einen Ventilator, insbesondere einen regelbaren Ventilator umfassen, der Umgebungsluft (Frischluft) ansaugt. Ebenso kann die Luftstromzuführeinheit 140 Prozessluft aus einer Anlage, beispielsweise einer Folienreckanlage, absaugen. Hierbei wird vorzugsweise Prozessluft angesaugt, die einen geringen Kontaminationsgrad aufweist und/oder eine niedrigere Temperatur als der zweite Luftstrom 216. Bei der Folienherstellung ist dies beispielsweise in der letzten Kühlzone der Fall.

Die Ablufteinheit 200 ist dazu eingerichtet ist, Abluft aus einer Anlage (beispielsweise einer Anlage zur Kunststofffolienherstellung) zu entnehmen und der Kondensatfallenvorrichtung 110 als zweiten Luftstrom 216 bereitzustellen.

Die Ablufteinheit 200 kann beispielsweise einen Ventilator 142, insbesondere einen regelbaren Ventilator umfassen. Zudem kann ein steuer-bzw. regelbares Ventil vorgesehen sein, welches es ermöglicht nur einen Teil 216 der entnommenen Abluft 200 der Kondensatfallenvorrichtung 110 bereitzustellen. Ein anderer Teil der Abluft 200 kann an die Umwelt abgegeben werden. Hier kann eine Filterung vorgesehen sein, sodass keine Schadstoffe in die Umwelt gelangen können. Der Ventilator 142 kann, wie gezeigt nach einer Abzweigung 141 angeordnet sein. Alternativ kann der Ventilator 142 (gestichelte Darstellung) auch vor der Abzweigung 141 angeordnet sein.

Der zweite Luftstrom 216 kann über eine Luftverteilervorrichtung geleitet werden. Die Luftverteilervorrichtung 108 ist dazu eingerichtet, den zweiten Luftstrom 212 von der Ablufteinheit 200 zu empfangen, den empfangen Luftstrom aufzufächern und den aufgefächerten Luftstrom an die Kondensatfallenvorrichtung 110, insbesondere eine Luftmischeinrichtung 109 bereitzustellen. Somit kann der Luftstrom über die gesamte Breite eines Luftmischelements geführt werden.

Der erste und der zweite Luftstrom 212, 216 werden, wie oben beschrieben, durch die Luftmischeinrichtung 109 der Kondensatfallenvorrichtung 110 geleitet. Der so erzeugte gemischte Luftstrom 214 wird dann auf bzw. durch ein Kondensationselement 112 geleitet, sodass Kontaminat kondensiert und aus dem Luftstrom entfernt wird. Schließlich kann ein gemischter, gereinigter Luftstrom 214' aus der Kondensatfallenvorrichtung 110 austreten und optional einer Grobfilteranordnung 120 und/oder zumindest einer Filteranordnung 130 zugeführt werden.

Der so gereinigte Luftstrom 214' kann dann über weitere Ventilatoren 144 an die Anlage als Zuluft 218 zurückgeführt werden.

Weiterhin kann ein Heizelement 150 vorgesehen sein, um den (teilweise) gereinigten Luftstrom zu temperieren. Das Heizelement 150 kann beispielsweise vor der Filteranordnung 130 angeordnet sein, diese Anordnung ist in Fig. 3A gezeigt. Ebenso kann das Heizelement 150 nach der Filteranordnung 130 angeordnet sein, diese Anordnung ist in Fig. 3B gezeigt.

Die Luftverteilervorrichtung 108, die Kondensatfallenvorrichtung 110 (mit optionaler Luftmischeinrichtung 109 und Kondensationselement 112), die Grobfilteranordnung 120 und/oder die Filtervorrichtung 130 können zu eine Luftreinigungseinheit 100 bilden. Das Luftreinigungssystem 2 kann mehrere (zumindest zwei) solcher Luftreinigungseinheiten 100 umfassen. Ebenso können einer Folienreckanlage mehrere Luftreinigungssysteme 2 zugeordnet sein, die wiederum zumindest eine oder mehrere Luftreinigungseinheiten umfassen können.

Eine Luftreinigungseinheit 100 kann beispielsweise einer Vorheizzone 23, eine Reckzone 24, einer Annealingzone 25 und/oder einer Kühlzone 26 einer Querreckanlage 22 zugeordnet sein, um diese mit diese mit Zuluft 218 zu versorgen. Der Luftstrom der Zuluft 218 kann über separate Ventilatoren 144 gesteuert bzw. geregelt werden. Es hat sich gezeigt, dass ein Einsatz in der Kühlzone 26 zu einer besonders effektiven Kontaminatabscheidung führt.

Ist das Luftreinigungssystem 2 beispielsweise einer Kühlzone 26 einer Reckanlage 20 (s. Fig. 5) zugeordnet, überstreicht die Zuluft 218 die Kunststofffolie 10 in der Kühlzone 26, nimmt etwaiges noch vorhandenes Kontaminat auf, und kann als Abluft 210 von einer Ablufteinheit 200 wieder abgesaugt werden. Zudem wird die Folie durch die Zuluft 218 abgekühlt.

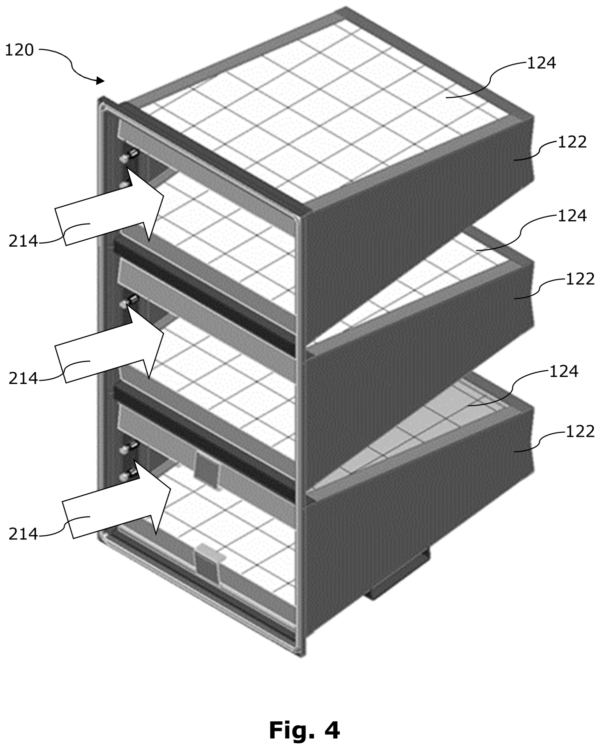

Figur 4 zeigt eine schematische Darstellung einer Grobfilteranordnung 120. Die Grobfilteranordnung 120 wird von einem Luftstrom, wie beispielsweise einem gemischten Luftstrom 214' durchströmt. Die Grobfilteranordnung 120 umfasst eine Vielzahl von Grobfiltern 124 (beispielsweise ein Metallgestrick, ein Reckblech, ein Filtervlies und/oder dergleichen), welche in einen entsprechenden Filterrahmen 122 eingelegt wurden. Die Grobfilter 124 können wiederverwendbar sein, oder nach dem Gebrauch ausgetauscht werden.

In einem anderen Aspekt kann die Grobfilteranordnung ähnlich der Kondensatfallenvorrichtung aufgebaut sein. Beispielsweise kann der Grobfilter in analoger Weise ein umlaufender oder beweglich gelagerter Grobfilter sein, der von dem Luftstrom 214 durchströmt wird. Eine Temperierung des Grobfilters ist hierbei nicht erforderlich. Zudem kann auch ein Reinigungselement (beispielsweise eine Druckluftdüse zum Ausblasen des Grobfilters, ein Schaber und/oder eine Bürste zum mechanischen reinigen des Grobfilters, und/oder dergleichen) vorgesehen sein, welches den Grobfilter, wenn er an dem Reinigungselement vorbeigeführt wird reinigt.

In Figur 5 ist äußerst schematisch eine Anlage 1 zur Herstellung einer Materialbahn 10 dargestellt, die mehrere verschiedene Anlagen und Vorrichtungen umfasst. Im gezeigten Beispiel ist die Anlage 1 eine Folienreckanlage, anhand der - ohne Beschränkung des Schutzbereichs - die Erfindung beispielhaft erläutert wird.

In diesem Fall ist die Materialbahn 10 eine Kunststofffolie. Im gezeigten Beispiel weist die Anlage 1 eine Extrusionsanlage 12, eine Gießwalzenanlage 14, zumindest eine Reckanlage 20 - wie eine Längsreckanlage 21 (MDO, "Machine Direction Orienter") und/oder eine Querreckanlage 22 (TDO, "Transverse Direction Orienter") - eine Zugwalzenanlage 16 sowie eine Wickleranlage 18 auf.

Die hergestellte Folie ist beispielsweise eine biaxial verstreckte Folie, wie Polypropylenfolie (BO-PP), Polyethylenterephthalatfolie (BO-PET), Polyamidfolie (BOPA), Polyethylenfolie (BO-PE), Polyactidfolie (BO-PLA), Kondensatorfolie (BOPP-C) oder Batterieseparatorfolie (BSF).

Zur Herstellung der Kunststofffolie 10 wird mittels der Extrusionsanlage 12 ein Film auf der Kühlwalze einer Gießwalzenanlage 14 erzeugt. Hierzu erzeugt die Extrusionsanlage 12 aus Ausgangsprodukten, wie Granulaten, eine Schmelze, die auf die Kühlwalze aufgetragen wird, wodurch der Film erzeugt wird.

Dieser Film wird als Materialbahn 10 von der Gießwalzenanlage 14 zur Längsreckanlage 21 gefördert, welche Teil einer Reckanlage 20 ist. In der Längsreckanlage 21 wird der Film in Längsrichtung gereckt, um eine Folie zu erhalten.

In der Längsreckanlage 21 läuft der Film über eine Vielzahl an Walzen, die beheizt sind, um den Film auf die gewünschte Temperatur zu bringen. Zudem kann der Film über die Walzen in Längsrichtung verstreckt werden.

Zwischen mindestens zwei der in der Längsreckanlage 21 vorhandenen Walzen findet die Reckung in Längsrichtung, d. h. in Abzugsrichtung, statt, sodass aus dem Castfilm zu einer monoaxial verstreckten Folie wird.

Die erhaltene Folie wird von der Längsreckanlage 21 zur Querreckanlage 22 gefördert und in der Querreckanlage 22 in Querrichtung gereckt.

Die Querreckanlage 22 hat entlang der Abzugsrichtung A der Anlage 10 einen Ofen 32 mit verschiedenen Zonen zur Behandlung der Folie.

In der ersten Zone, auch Vorheizzone 23 genannt, wird die Folie erwärmt. In der anschließenden zweiten Zone 24 ("Reckzone") wird die Folie in Querrichtung gereckt, sodass sie zum Ende der zweiten Zone eine größere Breite und geringere Dicke aufweist als zu Beginn.

Nach erfolgter Reckung durchläuft die Folie dann die dritte und weitere Zonen 25 ("Wärmebehandlungszone", "Weiterheizzone" und/oder "Annealingzone" genannt), bei der beispielsweise eine Relaxierung der Folie bei hohen Temperaturen erfolgen kann.

Anschließend verläuft die Folie durch eine weitere Zone 26 ("Kühlzone"), wobei die Folie in der letzten Zone abgekühlt wird.

Eine weitere Zone wird Neutralzone genannt und dient zur Trennung von Zonen. Die Neutralzone ist beispielsweise ein leerer Raum ohne Belüftung.

Die Zonen der Querreckanlagen 22 können auch anders aufgeteilt sein und/oder in ihrer Länge anders ausgeführt sein. Zum Beispiel können weniger oder kürzere Neutralzonen vorgesehen sein oder die Neutralzonen können an anderen Stellen, auch zusätzlich, angeordnet sein. Auch Änderungen an den übrigen Zonen sind denkbar.

Nach der Querreckanlage 22 verläuft die nun biaxial (in Längs- und Querrichtung) gereckte Folie 10 durch die Zugwalzenanlage 16 und wird mittels der Wickleranlage 18 aufgewickelt.

Denkbar ist auch, dass die Anlage 10 auf andere Weise ausgebildet ist, beispielsweise als Reckanlage alternativ oder zusätzlich zur Längsreckanlage 21 und/oder zur Querreckanlage 22 eine Simultanreckanlage mit einem Ofen aufweist.

Ebenso kann die Querreckanlage 22 bzw. deren Ofen und insbesondere die Vorheizzone 23, die Reckzone 24, die zumindest eine Annealingzone 25, und/oder die zumindest eine Kühlzone 26 über das beschriebene Luftreinigungssystem 2 be- bzw. entlüftet werden. In den Figuren 3A und 3B ist schematisch ein solches Luftreinigungssystem, das zur Be- bzw. Entlüftung der Kühlzone 26 genutzt werden kann, gezeigt. Die Kondensatfallenvorrichtung 110 dient dabei dazu die Kontaminat-Konzentration in der Ofenluft zu reduzieren und so die Qualität der Folie 10 zu verbessern und/oder die Standzeit der Anlage 1 zu erhöhen.

### Bezugszeichenliste

- 1: Folienreckanlage
- 2: Luftreinigungssystem
- 10: Materialbahn (z.B. Kunststofffolie)
- 12: Extrusionsanlage
- 14: Gießwalzenanlage
- 16: Zugwalzenanlage
- 18: Wickleranlage
- 20: Reckanlage
- 21: Längsreckanlage (MDO)
- 22: Querreckanlage (TDO)
- 23: Vorheizzone
- 24: Reckzone
- 25: Annealingzone
- 26: Kühlzone
- 32: Ofen
- 100: Luftreinigungseinheit
- 108: Luftverteilervorrichtung
- 109: Luftmischeinrichtung
- 110: Kondensatfallenvorrichtung
- 112: Kondensationselement
- 112a: Kondensationsabschnitt
- 112b: Förderabschnitt
- 112k: Gurtglied
- 112l: Gurtglied
- 112m: Gurtglied
- 112p: Draht
- 112q: Draht
- 112s: Gurtachse
- 113: Düsenanordnung
- 113a: Ausströmöffnung
- 114: Antriebseinheit
- 114a: Handkurbel
- 115: Auffangvorrichtung
- 116: Führungselement
- 117: Exzenterelement
- 118: Reinigungselement
- 119: Welle
- 120: Grobfilteranordnung
- 122: Filterrahmen
- 124: Grobfilter
- 130: Filteranordnung
- 140: Luftstromzuführeinheit (Ventilator)
- 141: Abzweigung
- 142: Ventilator
- 144: Ventilator
- 150: Heizelement
- 200: Ablufteinheit
- 210: Abluft
- 212: erster Luftstrom (T1)
- 214: Ausgabeluftstrom (gemischter Luftstrom)
- 216: zweiter Luftstrom (T2)
- 218: Zuluft
- A: Abzugsrichtung
- Z: Bewegungsrichtung (Translation)

## Patentansprüche

1. Kondensatfallenvorrichtung (110), insbesondere für eine Folienreckanlage (1), wobei die Kondensatfallenvorrichtung (110) folgendes umfasst:
zumindest ein beweglich gelagertes Kondensationselement (112), und zumindest eine Antriebseinheit (114), welche dem zumindest einen Kondensationselement (112) zugeordnet ist, wobei
das Kondensationselement (112) so in der Kondensatfallenvorrichtung (110) angeordnet ist, um von einem kontaminierten Luftstrom (214) durch- und/oder überströmt zu werden, wobei
das beweglich gelagerte Kondensationselement (112) so eingerichtet ist, dass Kontaminat, welches von dem Luftstrom (214) mitgeführt wird, zumindest teilweise an dem zumindest einen Kondensationselement (112) kondensiert, und wobei
die Antriebseinheit (114) mit dem Kondensationselement (112) gekoppelt ist, um das Kondensationselement (112) anzutreiben, sodass eine durch die Antriebseinheit bewirkte Bewegung des Kondensationselements (112) zu einer zumindest teilweisen Entfernung von kondensiertem Kontaminat von dem Kondensationselement (112) führt.

2. Die Kondensatfallenvorrichtung (110) nach Anspruch 1, wobei das zumindest eine, beweglich gelagerte Kondensationselement (112) derart mit der Antriebseinheit (114) gekoppelt ist, dass das zumindest eine Kondensationselement im Wesentlichen translatorisch angetrieben wird, wobei die Antriebseinheit (114) insbesondere dazu eingerichtet ist eine Rotationsbewegung in eine Translationsbewegung zu übersetzen, und wobei die Antriebseinheit (114) optional zumindest ein Exzenterelement (117) umfasst.

3. Die Kondensatfallenvorrichtung (110) nach Anspruch 1 oder 2, wobei das beweglich gelagerte Kondensationselement (112) bandförmig oder plattenförmig ist.

4. Die Kondensatfallenvorrichtung (110) nach Anspruch 3, wobei die Kondensatfallenvorrichtung (110) mehrere Führungselemente (116) umfasst, welche das Kondensationselement (112) so umlenken, dass es mehrfach von dem zweiten Luftstrom durchströmt wird.

5. Die Kondensatfallenvorrichtung (110) nach einem der Ansprüche 1 bis 4, wobei die Antriebseinheit (114) ein Antriebselement umfasst, und wobei das Antriebselement dazu eingerichtet ist, das Kondensationselement (112) mittelbar oder unmittelbar anzutreiben.

6. Die Kondensatfallenvorrichtung (110) nach einem der Ansprüche 1 bis 5, wobei die Kondensatfallenvorrichtung (110) eine Auffangvorrichtung (115) zum Auffangen von Kondensat umfasst.

7. Die Kondensatfallenvorrichtung (110) nach einem der Ansprüche 1 bis 6, wobei die Kondensatfallenvorrichtung (110) weiterhin eine Luftmischeinrichtung (109) umfasst, wobei
die Luftmischeinrichtung (109) dazu eingerichtet ist, einen ersten Luftstrom (212), welcher eine erste Temperatur (T1) aufweist, und einen zweiten, kontaminierten Luftstrom (216), welcher eine zweite Temperatur (T2) aufweist zu vermischen, um einen gemischten Luftstrom (214) zu generieren, wobei
die zweite Temperatur (T2) vorzugsweise höher ist als die erste Temperatur (T1).

8. Die Kondensatfallenvorrichtung (110) nach Anspruch 7, wobei die Luftmischeinrichtung (109) so eingerichtet ist, dass der erste Luftstrom (212) und der zweite Luftstrom (216) in einem Gleichstrom, einem Gegenstrom oder einem Querstrom in die Luftmischeinrichtung (109) strömen.

9. Die Kondensatfallenvorrichtung (110) nach einem der Ansprüche 7 oder 8, wobei die Luftmischeinrichtung (109) weiterhin zumindest eine Düsenanordnung (113) umfasst, wobei
die Düsenanordnung (113) zum Leiten des ersten und/oder zweiten Luftstroms (212, 216) eingerichtet ist, und wobei
die Düsenanordnung (113) eine Vielzahl von Ausströmöffnungen (113a) umfasst, die so angeordnet sind, dass der erste Luftstrom (216) und/oder der zweite Luftstrom (212) im Wesentlichen über die gesamte Breite des Kondensationselements (112) das Kondensationselement (112) anströmt.

10. Die Kondensatfallenvorrichtung (110) nach einem der Ansprüche 7 bis 9, wobei die Luftmischeinrichtung (109) zumindest ein Luftmischelement (109a, 109b, 109c) umfasst, welches von dem ersten Luftstrom (212) und dem zweiten Luftstrom (216) durchströmt wird.

11. Luftreinigungssystem (2), insbesondere für eine Folienreckanlage (1), das Luftreinigungssystem (2) umfassend
zumindest eine Kondensatfallenvorrichtung (110) nach einem der Ansprüche 7 bis 10,
zumindest eine Luftstromzuführeinheit (140), welche dazu eingerichtet ist, einen ersten Luftstrom (212) der Luftmischeinrichtung (109) der Kondensatfallenvorrichtung (110) bereitzustellen, und
zumindest eine Ablufteinheit (200), welche dazu eingerichtet ist, Abluft aus einer Anlage zu entnehmen und der Luftmischeinrichtung (109) der Kondensatfallenvorrichtung (110) als zweiten, kontaminierten Luftstrom (216) bereitzustellen, wobei
die Luftmischeinrichtung (109) dazu eingerichtet ist, den ersten Luftstrom (212) und den zweiten, kontaminierten Luftstrom (216), zu vermischen, um einen gemischten Luftstrom (214) zu generieren, und wobei
ein Kondensationselement (112) so in der Kondensatfallenvorrichtung (110) angeordnet ist, um von dem gemischten Luftstrom (214) durch- und/oder überströmt zu werden, um Kontaminat abzuscheiden, wobei
das Luftreinigungssystem (2) weiterhin dazu eingerichtet ist, den gemischten Luftstrom (214) nach der Kondensatfallenvorrichtung (110) an die Anlage als Zuluft bereitzustellen.

12. Luftreinigungssystem (2) nach Anspruch 11, wobei das Luftreinigungssystem (2) weiterhin zumindest eine Luftverteilervorrichtung (108) umfasst, wobei die Luftverteilervorrichtung (108) dazu eingerichtet ist den zweiten Luftstrom (212) von der Ablufteinheit (200) zu empfangen, den empfangen Luftstrom aufzufächern und den aufgefächerten Luftstrom an die Luftmischeinrichtung (109) bereitzustellen.

13. Luftreinigungssystem (2) nach Anspruch 11 oder 12, wobei das Luftreinigungssystem (2) weiterhin eine Grobfilteranordnung (120) umfasst, die optional der Kondensatfallenvorrichtung (110) nachgeschaltet ist.

14. Luftreinigungssystem (2) nach einem der Ansprüche 11 bis 13, wobei das Luftreinigungssystem (2) weiterhin zumindest eine Filteranordnung (130), und optional zumindest ein Heizelement (150) umfasst, wobei die zumindest eine Filteranordnung (130) in Strömungsrichtung vor und/oder nach dem Heizelement (150) angeordnet ist.

15. Anlage zur Herstellung einer Materialbahn (10), insbesondere Folienreckanlage (1), mit zumindest einem Luftreinigungssystem (2) nach einem der Ansprüche 11 bis 14.
